Europäisches Patentamt

European Patent Office

Office européen des brevets

(11) Numéro de publication: **0 432 048 A1**

# DEMANDE DE BREVET EUROPEEN

(21) Numéro de dépôt: 90403474.1

(51) Int. Cl.5: **H04N 7/167**

(22) Date de dépôt: **06.12.90**

(30) Priorité: **08.12.89 FR 8916271**

(43) Date de publication de la demande:
**12.06.91 Bulletin 91/24**

(84) Etats contractants désignés:
**CH DE FR GB LI**

(71) Demandeur: **LABORATOIRE EUROPEEN DE RECHERCHES ELECTRONIQUES AVANCEES, SOCIETE EN NOM COLLECTIF**
**9, Place des Vosges La Défense 5**
**F-92400 Courbevoie(FR)**

(72) Inventeur: **Leduc, Michel**
**THOMSON-CSF, SCPI, Cédex 67**
**F-92045 Paris la Défense(FR)**
Inventeur: **Diehl, Eric**
**THOMSON-CSF, SCPI, Cédex 67**
**F-92045 Paris la Défense(FR)**
Inventeur: **Hamon, Joel**
**THOMSON-CSF, SCPI, Cédex 67**
**F-92045 Paris la Défense(FR)**
Inventeur: **Dorner, Albert**
**THOMSON-CSF, SCPI, Cédex 67**
**F-92045 Paris la Défense(FR)**
Inventeur: **Mahler, Jacky**
**THOMSON-CSF, SCPI, Cédex 67**
**F-92045 Paris la Défense(FR)**

(74) Mandataire: **Chaverneff, Vladimir et al**
**THOMSON-CSF SCPI**
**F-92045 PARIS LA DEFENSE CEDEX 67(FR)**

(54) Procédé de promotion d'émissions de télévision à péage, et dispositif de mise en oeuvre.

(57) Le procédé de l'invention s'adresse aux réseaux de télévision à péage à embrouillage renforcé. Pour attirer de futurs abonnés, l'invention prévoit de transmettre les images cycliquement, en clair, pendant de brèves périodes, ce qui permet de se rendre compte du genre des émissions.

FIG_1

### PROCEDE DE PROMOTION D'EMISSIONS DE TELEVISION A PEAGE ET DISPOSITIF DE MISE EN OEUVRE

La présente invention se rapporte à un procédé de promotion d'émissions de télévision à péage et à son dispositif de mise en oeuvre.

Les images de télévision émises par des émetteurs de réseaux de télévision à péage sont embrouillées actuellement de façon relativement peu confidentielle avec des systèmes de "première génération" (par exemple par décalage de phase), mais un tel codage est relativement facile à "pirater". Ces systèmes tendent à être remplacés par des systèmes de "deuxième génération" (par exemple à images numériques) plus sophistiqués et beaucoup plus difficiles ou presque impossibles à pirater, tout au moins si l'on ne met pas en oeuvre des moyens considérables dont le prix est nettement supérieur au prix de l'abonnement, même pour un long terme. Dans ce dernier cas, l'embrouillage est tel que l'on ne reconnaît absolument pas le genre d'images émises ou la nature des programmes embrouillés. Une image ainsi complètement embrouillée ne peut attirer d'éventuels futurs abonnés, et la simple connaissance des programmes par la lecture d'un journal qui en publie les détails est à peine plus attractive.

La présente invention a pour objet un procédé permettant, dans un réseau de télévision à péage, d'attirer de la façon la plus efficace possible de futurs abonnés potentiels, ainsi qu'un dispositif de mise en oeuvre de ce procédé.

Le procédé conforme à l'invention consiste a diminuer le niveau d'embrouillage des émissions pendant une partie du temps d'émission en mode embrouillé.

Selon un aspect du procédé de l'invention, on rend visible au moins une partie de l'image pendant une partie du temps d'émission. Selon un aspect avantageux de ce procédé, on fait afficher sur les écran des récepteurs non pourvus de décodeurs, de façon au moins approximativement périodique, des messages non embrouillés, indiquant par exemple les modalités d'abonnement à ce réseau.

Le dispositif conforme à l'invention comporte, dans l'émetteur, un inverseur commandé par le circuit de commande d'embrouillage, relié au canal vidéo, en amont du circuit d'embrouillage, une des deux sorties de ce commutateur étant reliée à l'entrée du circuit d'embrouillage, et son autre sortie étant reliée directement à la sortie du circuit d'embrouillage.

Selon une variante de l'invention, le dispositif comporte un registre intercalé entre le générateur pseudo-aléatoire du dispositif commandant l'embrouillage et le circuit vidéo d'embrouillage, l'entrée de commande de ce registre étant reliée à un circuit compteur de lignes.

La présente invention sera mieux comprise à la lecture de la description détaillée de plusieurs modes de réalisation, pris à titre d'exemples non limitatifs et illustrés par le dessin annexé, sur lequel :

- les figures 1 et 2 sont deux exemples d'images embrouillées conformément au procédé de l'invention, et
- les figures 3 et 4 sont des blocs diagrammes simplifiés de circuits de commande d'embrouillage conformes à l'invention.

Selon un premier aspect du procédé de l'invention, on commande une alternance de périodes d'embrouillage et de périodes de transmission en clair de l'image d'un réseau de télévision à péage. Cette alternance peut se faire cycliquement avec un rapport cyclique fixe ou variable. Cette alternance peut également être commandée aléatoirement.

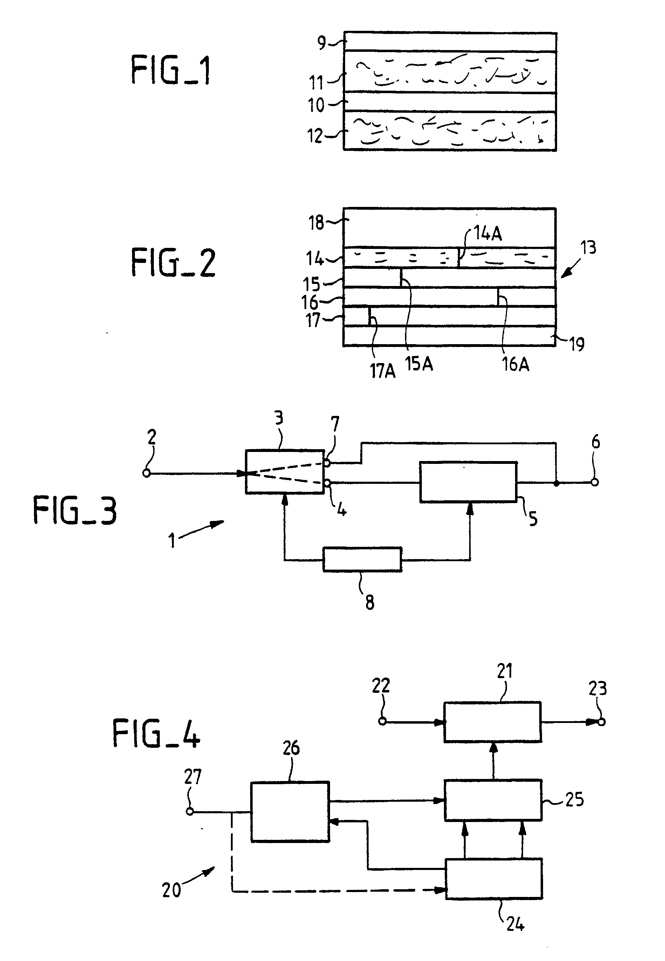

Un circuit 1 permettant de commander une telle alternance a été représenté en figure 3. Le circuit 1 est disposé dans le canal vidéo d'un émetteur de télévision pouvant émettre des images embrouillées. La borne recevant la vidéo à embrouiller est référencée 2. Cette borne 2 est reliée à l'entrée d'un inverseur 3. Une première sortie, référencée 4, de l'inverseur 3 est reliée à l'entrée du circuit vidéo d'embrouillage 5 de l'émetteur. La sortie du circuit 5 est reliée à une borne 6. La deuxième sortie, référencée 7, de l'inverseur 3 est directement reliée à la borne 6. Le circuit 5 est commandé par un circuit de commande approprié 8, comportant par exemple, de façon habituelle un microprocesseur et un générateur pseudo-aléatoire (non représenté en détail).

Le circuit 8 est programmé, de façon évidente en soi pour l'homme de l'art, pour commander les basculements successifs de l'inverseur 3 de façon régulière ou aléatoire. De préférence les périodes pendant lesquelles l'inverseur 3 active sa sortie 7 sont plus courtes (par exemple dans un rapport compris entre 1 à 3 et 1 à 10) que les périodes pendant lesquelles l'inverseur 3 active sa sortie 4. Ainsi, on peut attirer un téléspectateur non abonné en lui laissant entrevoir des parties des émissions diffusées sans toutefois lui permettre de les suivre longtemps à cause de la gêne occasionnée par l'alternance embrouillé/non embrouillé.

Selon un second aspect du procédé de l'invention, illustré en figure 1, on embrouille seulement une partie de l'image. Comme représenté, de façon simplifiée, en figure 1, on peut faire alterner des zones non embrouillées 9, 10 et des zones complètement embrouillées 11, 12. De façon simple, ces zones sont des bandes horizontales s'étendant sur toute la largeur de l'écran. Selon des variantes, non représentées, ces zones peuvent être des bandes verticales s'étendant sur toute la hauteur de l'écran, ou des "fenêtres" temporelles découpées dans l'image de l'écran. Toutes ces zones peuvent être fixes ou mobiles.

Selon un troisième aspect du procédé de l'invention, illustré figure 2, on crée, sur au moins une partie de l'image une "mosaïque" 13. Cette mosaïque 13 comporte une succession de bandes horizontales 14, 15, 16, 17... s'étendant sur toute la largeur de l'image. Dans chacune de ces bandes on détermine un point de coupure 14A, 15A, 16A, 17A qui est le même pour toutes les lignes comprises dans la bande considérée. Ces points de coupure peuvent être fixes pendant toute la durée d'une émission, ou bien rester fixes pendant de courts laps de temps (quelques secondes par exemple), puis changer d'abscisse, indépendamment les uns des autres ou non, par petits paliers de même sens ou aléatoirement. Les largeurs de ces bandes horizontales peuvent être égales ou non, être fixes ou variables. La hauteur de la mosaïque 13 peut être égale ou inférieure à celle de l'image, et dans ce dernier cas les zones non embrouillées peuvent être de chaque côté de la mosaïque (zones 18 et 19 en haut et en bas de l'écran, respectivement comme représenté sur la figure 2), ou d'un seul côté, ou alterner avec plusieurs zones de mosaïque.

On a représenté en figure 4 le bloc diagramme simplifié d'un circuit 20 permettant la mise en oeuvre des deuxième et troisième aspects précités su procédé de l'invention.

Le circuit 20 comporte un circuit vidéo d'embrouillage classique 21 dont l'entrée 22 reçoit le signal vidéo à embrouiller, et sur la sortie 23 duquel apparaît la vidéo embrouillée. Le circuit 21 est commandé par un circuit de commande approprié 24 à microprocesseur et généréteur pseudo-aléatoire, similaire au circuit 8 de la figure 3.

Un registre 25, par exemple du type à trois états, est intercalé entre les circuits 21 et 24. L'entrée de mise en haute impédance du registre 25 est reliée à un compteur 26 recevant sur son entrée 27 des signaux dérivés des signaux de synchronisation de lignes. Le compteur 26 peut être pré-programmé ou commandé par le circuit 24. Ainsi, le compteur 26 peut bloquer la liaison entre le circuit de commande 24 et le circuit embrouilleur 21 pendant un certain nombre de lignes, et donc provoquer la transmission en clair de la bande comportant ces lignes, les autres étant émises de façon normalement embrouillée.

Pour la formation de la configuration de la figure 2, le compteur 26 bloque la transmission entre le circuit 24 et le circuit 21, en inhibant le registre 25, pendant les périodes "en clair" 18 et 19, et la formation de la mosaïque 13 est commandée par le circuit 24, qui reçoit également les signaux de la borne 27 et qui est programmé de façon à produire le même point de coupure pendant un certain nombre de lignes.

Pour produire des bandes verticales ou des fenêtres dans l'image, le circuit 24 est programmé pour inhiber le registre 25 à certains endroits déterminés de chaque ligne.

## Revendications

1. Procédé de promotion d'émissions d'un réseau de télévision à péage, caractérisé par le fait qu'il consiste à diminuer le niveau d'embrouillage des émissions pendant une partie du temps d'émission en mode embrouillé.

2. Procédé selon la revendication, caractérisé par le fait que l'on rend visible au moins une partie de l'image pendant une partie du temps d'émission (figures 1, 2).

3. Procédé selon la revendication 1 ou 2, caractérisé par le fait qu'on fait afficher sur les écrans de réception non pourvus de décodeurs, de façon au moins approximativement périodique, des messages non embrouillés.

4. Procédé selon la revendication 3, caractérisé par le fait que les messages indiquent les modalités d'abonnement au réseau.

5. procédé selon la revendication 1 ou 2, caractérisé par le fait que l'on commande une alternance de périodes d'embrouillage et de périodes de transmission en clair de l'image.

6. Procédé selon la revendication 5, caractérisé par le fait que l'alternance est faite avec un rapport cyclique fixe.

7. procédé selon la revendication 6, caractérisé par le fait que l'alternance est faite avec un rapport cyclique variable.

8. Procédé selon la revendication 6, caractérisé par le fait que l'alternance est commandée aléatoirement.

9. Procédé selon la revendication 1 ou 2, caractérisé par le fait que l'on fait alterner dans l'image émise des zones non embrouillées et des zones complètement embrouillées.

10. procédé selon la revendication 9, caractérisé par le fait que ces zones sont des bandes horizontales s'étendant sur toute la largeur de l'écran (figure 1).

11. Procédé selon la revendication 10, caractérisé par le fait que ces zones sont des bandes verticales s'étendant sur toute la hauteur de l'écran.

12. Procédé selon la revendication 9, caractérisé par le fait les zones "en clair" sont des "fenêtres" temporelles découpées dans l'image de l'écran.

13. Procédé selon l'une des revendications 9 à 12, caractérisé par le fait que les zones sont fixes.

14. Procédé selon l'une des revendications 9 à 12, caractérisé par le fait que les zones sont mobiles.

15. Procédé selon la revendication 1 ou 2, caractérisé par le fait que l'on crée sur au moins une partie de l'écran une "mosaïque" comportant une succession de bandes horizontales dans chacune desquelles on détermine un point de coupure qui est le même pour toutes les lignes comprises dans la bande considérée (figure 2).

16. Dispositif de promotion d'émissions de télévision à péage, caractérisé par le fait qu'il comporte dans l'émetteur du réseau un inverseur (3) commandé par le circuit (8) de commande d'embrouillage et relié au canal vidéo, en amont du circuit d'embrouillage (5), une des deux sorties de cet inverseur étant reliée à l'entrée du circuit d'embrouillage, et son autre sortie étant reliée directement à la sortie du circuit d'embrouillage.

17. Dispositif de promotion d'émissions de télévision à péage, caractérisé par le fait qu'il comporte un registre (25) intercalé entre le circuit à générateur pseudo-aléatoire (24) commandant l'embrouillage, et le circuit vidéo d'embrouillage (21), l'entrée de commande de ce registre étant reliée à un circuit compteur de lignes (26).

18. Décodeur pour désembrouiller des émissions de télévision embrouillées, caractérisé par le fait qu'il met en oeuvre le procédé selon l'une des revendications 1 à 15.

FIG_1

9
11
10
12

FIG_2

18
14A
14
13
15
16
17
17A 15A 16A
19

FIG_3

2
3
7
6
4
5
1
8

FIG_4

22
21
23
26
27
25
20
24

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FUNKSCHAU, vol. 57, no. 8, avril 1985, pages 58-64, Munich, DE; G. BOCK: "So funktioniert Scrambling" <br> * En entier * | 1,16,17 | H 04 N <br> 7/167 |
| A | ELECTRONICS, vol. 42, no. 11, 26 mai 1969, pages 123-128; F. COREY: "Pay tv gets in the broadcast picture" <br> * Page 124, colonne centrale, lignes 5-15 * | 1 | |
| A | DE-A-3 530 822  (HANS KOLBE & CO.) <br> * Colonne 7, lignes 23-35 * | 1,16,17 | |

**DOMAINES TECHNIQUES RECHERCHES (Int. Cl.5)**

H 04 N

Le présent rapport de recherche a été établi pour toutes les revendications

| Lieu de la recherche | Date d'achèvement de la recherche | Examinateur |
|---|---|---|
| La Haye | 27 février 91 | GREVE M.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

&: membre de la même famille, document correspondant